Europäisches Patentamt

European Patent Office

Office européen des brevets

(19)

(11) **EP 1 171 756 B1**

(12) **EUROPEAN PATENT SPECIFICATION**

(45) Date of publication and mention
of the grant of the patent:
**24.03.2004 Bulletin 2004/13**

(21) Application number: **00922847.9**

(22) Date of filing: **10.04.2000**

(51) Int Cl.$^7$: **H04N 1/32**

(86) International application number:
**PCT/IT2000/000132**

(87) International publication number:
**WO 2000/063647 (26.10.2000 Gazette 2000/43)**

(54) **METHOD OF DETECTING A WATERMARK IN DIGITAL IMAGES**

VERFAHREN ZUM HERAUSFINDEN EINES WASSERZEICHENS IN DIGITALEN BILDERN

PROCEDE DE DETECTION D'UN FILIGRANE DANS DES IMAGES NUMERIQUES

(84) Designated Contracting States:
**GB**

(30) Priority: **16.04.1999 IT FI990090**

(43) Date of publication of application:
**16.01.2002 Bulletin 2002/03**

(73) Proprietor: **Universita' Degli Studi di Firenze
50121 Firenze (IT)**

(72) Inventors:
• **BARNI, Mauro
I-59100 Prato (IT)**
• **BARTOLINI, Franco
I-50143 Firenze (IT)**
• **CAPPELLINI, Vito
I-50139 Firenze (IT)**
• **DE ROSA, Alessia
I-50134 Firenze (IT)**
• **PIVA, Alessandro
I-50018 Scandicci (IT)**

(74) Representative: **Mannucci, Michele et al
Ufficio Tecnico Ing.A. Mannucci,
Via della Scala 4
50123 Firenze (IT)**

(56) References cited:
**EP-A- 0 382 549      EP-A- 0 860 984
WO-A-98/54897**

**Description**

Technical field

The present invention relates to a process for detecting the presence of a watermark in a digital image.

Prior art

The process of watermarking a digital image consists in the insertion, into the image itself, of a code (or watermark) containing data, for example data relating to the author of the image or to the origin of the image.

Electronic watermarking has been developed in response to the problem of protecting the copyright in digital documents; one of the most common applications is to permit the detection of any unauthorized copies of the image, which is generally of high quality. Clearly, therefore, the essential characteristic of an electronic watermark is its *invisibility*. In other words, the presence of the electronic watermark must not degrade the quality of the image, and must not be observable by a comparison with the original, non-watermarked image, not only for reasons of quality, but also in order to avoid the possibility of identification of the watermark by the observer.

The characteristic of invisibility is not in itself sufficient to guarantee the protection of the image, since it would be simple for any counterfeiter to make the inserted code unreadable by suitable processing of the image (for example, by filtering it or by cropping part of it). It will be understood, therefore, that, together with invisibility, a watermark must have the characteristic of *robustness*: the watermark must be readable even in an image which has undergone processing, and its robustness increases as it becomes more recoverable even in seriously degraded images. Typically, the processing undergone by the image can consist of cropping or geometrical deformation (by rotation, for example) or enlargement (zoom).

In general, the term "processing" denotes, in the present context, nondestructive attacks on the image: this is because, if the watermarked image is degraded to the point where the content can no longer be distinguished, there is no longer any point in recovering the watermark.

Watermarking methods are distinguished according to various criteria. A first criterion divides the watermarking methods into systems which operate in the spatial domain and systems which operate in the transformed domain. In the first case, the watermark is inserted directly into the pixels of the image, changing their values according to a law which varies according to the code which is to be inserted. These methods have the advantage of being able to easily use the characteristics of the human eye to make the watermark invisible, adapting the watermarking geometry to the individual image; on the other hand, these methods are generally less able to withstand geometrical manipulation (such as the cropping of part of the image). An example of watermarking of this type is described in EP-A-0 725 529.

In the second case (methods operating in the transformed domain), a mathematical transform is applied to the image to be watermarked, after which a suitably selected group of coefficients of the transform is changed according to the code to be inserted; finally, the inverse transform is applied to obtain the watermarked image. An example of this type of watermarking is described in EP-A-0 766 468.

The use of a transform has the advantage that the electronic watermark is diffused uniformly into every area of the watermarked image: this makes these methods more resistant to geometrical manipulations of the image. On the other hand, when operating in the transform domain, it is impossible to distribute the watermark on the image in an adaptive way, in such a way as to make it less visible to the human eye.

Watermarking systems can also be classified in a different way, according to the method of watermark detection: systems are described as *blind* if the watermark is detected without the use of the original image, and *non blind* if the original image has to be available for the detection of the watermark. The system according to the present invention is, for all practical purposes, a blind system.

Finally, another important distinction is made between *readable* and *detectable* methods. Readable methods are capable of *reading* the watermark present in an image, while detectable methods can only *detect* the presence of a certain known watermark in an image. The method according to the present invention falls into the second category: if the identification code of a certain author is known, it is possible to determine whether or not it is present in an image. It should be noted that. while readable methods are useful for checking the origin of a certain image, they have a low level of robustness: this is because, assuming that the watermarking algorithm is known, a code which is readable by anyone can also be easily tampered with by any counterfeiters. However, this disadvantage is not present for detectable methods, in which each code is known only to the author or to the distributor of the image.

If it is desired to check whether a given image has been obtained from a complete or partial copy or by manipulation of an image protected by electronic watermarking, or whether it has been derived from it in any way, it is necessary to process this image to detect the possible presence of the watermark in it.

The present invention relates, in particular, to the process of decoding and detecting the watermark, which is described below together with a corresponding watermarking process.

A process of decoding and detecting a watermark in an image according to the preamble of claim 1 is disclosed in EP-A-860984.

Objects and summary of the invention

The object of the present invention is to provide a method of decoding and detecting watermarks in digital images which is particularly robust, in other words which enables the watermark to be recovered (detected) even in images which have been seriously degraded, for example by geometrical transformations and cropping which they have undergone.

The object of the present invention is also to provide a method which is reliable, in other words one which reduces the possibilities of error in detection to a minimum.

These and further objects and advantages of the method according to the present invention are achieved with a method of decoding and detecting the presence of a watermark in a digital image according to claim 1.

In a possible embodiment, the method of the invention includes the following steps:

a) acquiring the digital image;
b) obtaining from the digital image, by the application of a transform, a matrix of coefficients of a transform;
c) selecting a group of said coefficients;
d) determining a detection function which is dependent on the watermark which is to be detected in said digital image;
e) defining a threshold function of said watermark;
f) calculating a single value of said detection function for the selected coefficients of said matrix of coefficients;
g) calculating a single value of said threshold for the selected coefficients of said matrix of coefficients;
h) comparing the value of said threshold with the value of said detection function, and determining, by said comparison, whether or not the digital image includes said watermark.

Alternatively, in a simplified embodiment, the presence or absence of the watermark in the image is determined directly by means of the calculated value of the detection function. In this case, the threshold value is not defined, and no comparison is made between the calculated value of the detection function and the threshold value. However, this embodiment is less reliable.

In practice, the applied transform is a discrete Fourier transform, preferably implemented by means of a fast calculation algorithm, for example an FFT transform. Alternatively, the Wavelet, DCT or equivalent transforms can be used.

In a practical embodiment of the method according to the invention, the detection function is defined by

$$L(y) = \sum_{i=0}^{N-1}\left[-\beta_i \ln\left(1 + \alpha_m m_i^*\right)\right] + \sum_{i=0}^{N-1}\left[-\left(\frac{y_i}{\alpha_i\left(1 + \alpha_m m_i^*\right)}\right) + \left(\frac{y_i}{\alpha_i}\right)^{\beta_i}\right]$$

where m* = {mi*}=0...N-1, being the watermark whose presence is to be checked,
N is the number of watermarked coefficients of said matrix,
yi is the i-th watermarked modulus of said matrix,
αm is the mean energy of the watermark,
αi and βi are statistical parameters which describe the variation of the generic modulus of the watermarked coefficient.

As will be explained subsequently, both the watermarking process and, consequently, the process of decoding and detecting the watermark can be implemented on one or more chromatic components of the digital image to be watermarked or decoded respectively. In this case, the detection of the watermark is repeated in an essentially identical way for all three chromatic components of the image. Alternatively, and preferably, the watermarking and, consequently, the decoding and detection of the watermark are carried out on a luminance image obtained from the three chromatic components of the initial image, while the chrominance components are not involved in the process of watermarking/detection.

Preferably, not all the coefficients of the matrix obtained by the transform are subject to the processing required for the detection of the watermark. In practice, whereas in watermarking a selection of the coefficients to be watermarked is made, in detection a corresponding selection of coefficients is made (in positions corresponding to those of the coefficients subject to the application of the watermark). The decoding and detection operations are then carried out on this group of selected coefficients.

In order to make the method robust and insensitive to any geometrical changes undergone by the images to be decoded, in a particularly advantageous embodiment of the method the spatial image to be decoded is expanded to a predetermined size, and said transform is applied to the expanded spatial image for the recovery of a timing, said timing being applied to the spatial image to be decoded to produce a timed spatial image. In practice, the expansion is then repeated a second time on the timed image and a further transform is then carried out.

Further advantageous characteristics and embodiments of the method according to the invention are indicated in the attached claims and are illustrated below, with reference to an embodiment which is particularly advantageous, but is not limiting.

The invention also relates to a method and system for digital image watermarking, including the steps of:

a) acquiring an original image to be watermarked;
b) braking down the original image into the three color components;
c) defining, from said color components, a spatial image;
d) expanding said spatial image to a predetermined dimension in order to obtain an expanded spatial image;
e) applying to said expanded spatial image a transfor for transforming the expanded spatial image in a matrix of coefficients of said transform;
f) selecting a group of said coefficients;
g) applying a watermark to the selected coefficients of the transform to obtain a watermarked coefficient matrix;
h) applying an inverse transform to the watermarked coefficient matrix in order to obtain a watermarked spatial image;
i) bringing the watermarked spatial image back to the original dimensions of the image before the image was expanded to said predetermined dimension:
j) introducing a timing in said watermarked spatial image;
k) reintroducing the watermarked and timed spatial image in the original image.

According to a preferred embodiment, said spatial image is a luminance image obtained by combining said three color components.

Preferably, the transform applied is a discrete Fourier transform (DFT).

Additional advantageous optional features of the watermarking method are discussed herein below.

Brief description of the drawings

The invention will be more clearly understood if reference is made to the following detailed description of a preferred, but not limiting, embodiment, and to the accompanying set of attached drawings, which show:

in Fig. 1, a general block diagram of the watermarking process;
in Fig. 2, an example of a luminance image extended to 1024x1024 pixels;
in Fig. 3, a block diagram of the process of generating the watermark;
in Fig. 4, the curve of the sensitivity of the human eye as a function of the gray levels, which is significant for the process of masking the watermark;
in Figs. 5(a) and 5(b), the sensitivity mask and the luminance image from which the sensitivity mask has been formed;
in Figs. 6(a) and 6(b) respectively, the selection of the group of coefficients of the discrete Fourier transform of the luminance image to be watermarked and the reinsertion of the watermarked coefficients into the spectrum of the DFT moduli in conformity with the properties of symmetry;
in Fig. 7, the schematic representation of the properties of symmetry of the matrix of the moduli of the coefficients of the DFT transform;
in Figs. 8(a), 8(b) and 8(c), the luminance image, the luminance image watermarked with uniform energy and the luminance image watermarked and masked;
in Fig. 9, a block diagram of the process of decoding and detecting the watermark in a watermarked image;
in Figs. 10(a) and 10(b), a schematic representation of the watermarking process, showing the expansion of the image to 1024x1024 pixels and the decoding of the watermark in the presence of cropping of the watermarked image;
in Fig. 11, the division of the watermarked area of the DFT spectrum into zones for decoding the watermark; and
in Fig. 12, a diagram of a system for watermarking digital images for subsequent insertion into a data communication network.

Detailed description of the preferred embodiment of the invention

A. WATERMARKING PROCESS

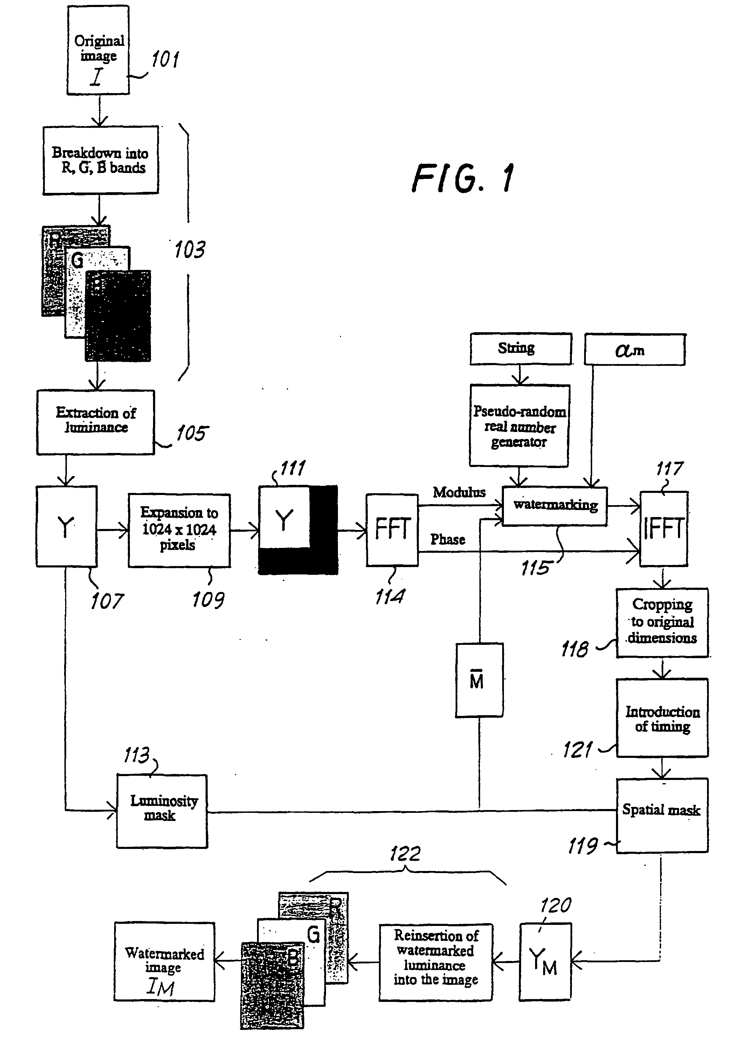

The block diagram in Fig. 1 shows in a schematic way the various steps into which the watermarking process according to the invention is divided. The blocks will be described individually in detail: blocks which are closely related to each other will be examined jointly, to provide a degree of continuity in the description.

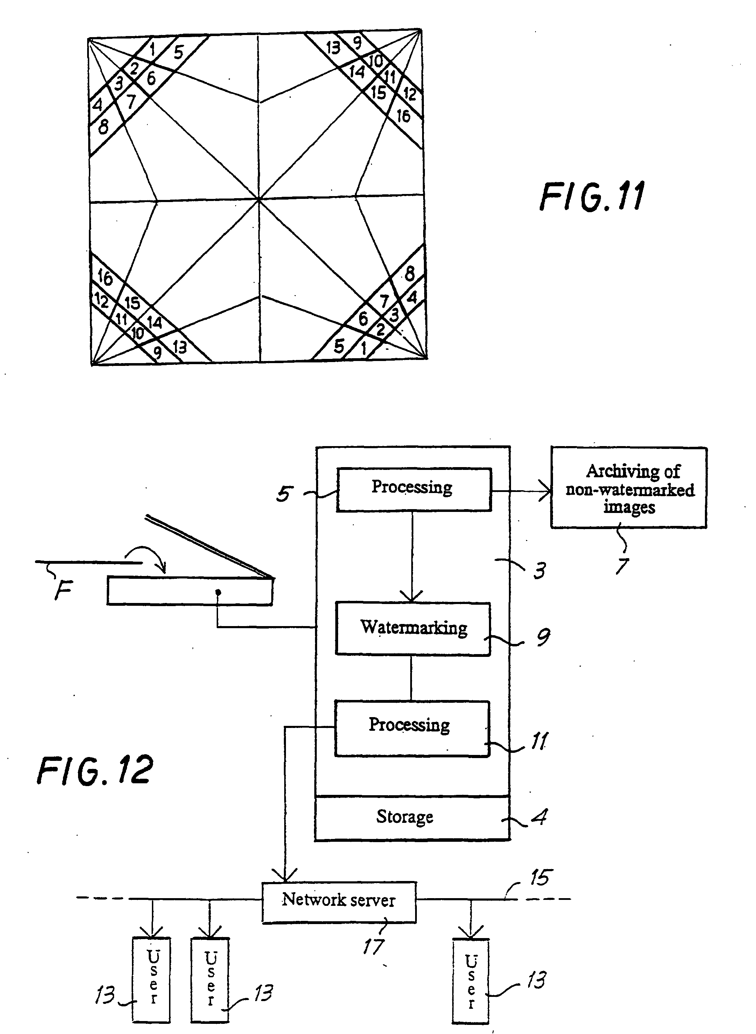

Fig. 12 shows schematically a system for the acquisition and watermarking of images for subsequent insertion into a data communication network. The number 1 indicates in a general way an acquisition device, for example a scanner, in which a physical medium carrying an image, for example a photograph F, is placed for acquisition. The number 3 indicates schematically an electronic computer which contains a software program for processing (5) the acquired images, for example in order to enhance their quality and/or to carry out additional manipulations or processing. The number 4 indicates in general a temporary store and, if required, a backing store (hard disk) of the computer.
The computer 3 is associated with a digital archive, for example a set of optical media (CD-ROM), magnetic tapes or other backing storage media, in which the unmarked images acquired and processed by the electronic computer 3 can be stored if necessary. The archive 7 is not externally accessible, and consequently the images stored in it do not require watermarking.
The images which are to be distributed, for example via a data communication network and an electronic trading system of the type currently becoming widespread on the Internet or other data communication network systems, are subjected by the computer 3 to a watermarking process by the method described below, which is implemented by a processing software program 9. The watermarked images, which may if necessary undergo further processing at (11), are then made available to users 13 of a data communication network 15 through a network server 17.
The steps of the watermarking process are as follows.

Breakdown into R. G and B bands and extraction of the luminance

The color digital image to be watermarked I. acquired by means of the scanner 1 or in another suitable way, is broken down into its three color components R. G, B (Fig. 1. block 103), from which the luminance Y of the image I is extracted (Fig. 1, blocks 105, 107). This is because the watermarking operation, according to the embodiment of the process described here, relates to this component only.
To extract the luminance Y, it is necessary to use one of the many invertible transforms which permits a change of coordinates from the R-G-B system to a luminance-chrominance system and vice versa. Some possibilities for this purpose are:

$$Y = (R + G + B)/3$$

$$C_1 = B/Y$$

$$C_2 = (2R + B)/(2Y)$$

$$\begin{pmatrix} Y \\ I \\ Q \end{pmatrix} = \begin{pmatrix} 0.299 & 0.587 & 0.114 \\ 0.596 & -0.274 & -0.322 \\ 0.211 & -0.523 & 0.312 \end{pmatrix} \begin{pmatrix} R \\ G \\ B \end{pmatrix}$$

$$\begin{pmatrix} X \\ Y \\ Z \end{pmatrix} = \begin{pmatrix} 0.476 & 0.299 & 0.175 \\ 0.262 & 0.656 & 0.082 \\ 0.020 & 0.161 & 0.909 \end{pmatrix} \begin{pmatrix} R \\ G \\ B \end{pmatrix}$$

where Y is the luminance component, and the other two components correspond to the chrominance and remain unaltered by the watermarking process. The method according to the present invention can theoretically use any one of these transforms, the result being a matrix of pixels which will be referred to subsequently as the luminance image.

Further details of the transforms indicated above and of alternative transforms can be found in G. Wyszecki and W.S. Stiles. Color science, concepts and methods, quantitative data and formulae, 2nd edition, Wiley Interscience Publications, 1982.

As mentioned in the introductory section. there is no reason why the watermark should not be inserted in all three chromatic bands: if this is done. the process described below is repeated in an identical way on each of the three matrices representing the R-G-B components of the image. The detection of the watermark can be based, for example, on a majority criterion (if the watermark is present in at least 2 bands, then it is present in the image).

Expansion to 1024x1024 pixels

The luminance image Y, formed by the combination of the R, G, B components as described in the preceding paragraph, has the same dimensions as the initial image I, which can have any dimensions. However, it is advantageous to extend the image Y to a predetermined size, in such a way that:

-    the number of the rows and columns of the extended image is a power of two;
-    all the images are always extended to the same size.

As regards the first condition, if the images to be subjected to watermarking have dimensions which are powers of two, then it is possible to use the fast Fourier transform (FFT) calculation algorithm. This makes it possible to reduce considerably the calculation times both for the watermarking and, especially, for the decoding of the watermark (as will be explained subsequently, this is because in the decoding step it is necessary to calculate two transforms on the image).

As regards the second condition, by creating predetermined reference dimensions for all the images it is possible to detect the watermark even from a portion of the watermarked image rather than from the complete image. This is because, in the detection step, the watermark can be decoded only if the dimensions to which the image is extended are the same as those used in the watermarking step. By changing the size of the luminance image, both in the watermarking step and in the decoding step, to a constant and predetermined size, it is possible to detect the presence (or the absence) of the watermark even in images which form portions of the original image, being produced, for example, by cropping.

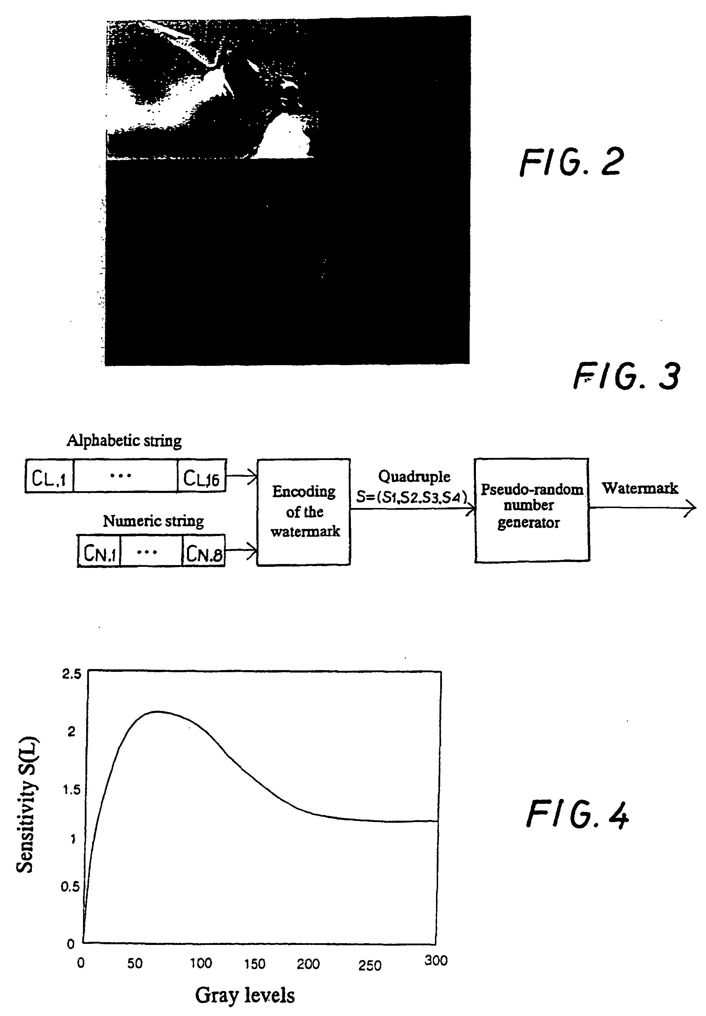

The luminance image Y is then extended (Fig. 1, block 109) by the addition of zero samples (in other words, black according to the gray scale: see Fig. 2), until the predetermined dimensions are reached (Fig. 1, block 111). Only after this is the watermarking carried out. In the case in question, a reference size of 1024x1024 pixels has been selected. This is because it is assumed that most of the images to be marketed on the network (and therefore potentially subject to the watermarking process) have dimensions smaller than 1024x1024. Moreover. the selected dimensions are powers of two, and therefore enable the fast Fourier transform (FFT) calculation algorithm to be used.

Clearly, it would be possible to select reference dimensions of 512x1024 or 2048x2048, or even to extend the image to the dimensions (powers of 2) immediately above those of the image. In the latter case, however, the decoding times increase considerably: this is because the decoding has to be carried out in a number of attempts until the extension used in the watermarking step has been identified among all the specified possible extensions. An example will help to clarify this point: assuming that an image with dimensions of 600x400 pixels is to be watermarked, this image will be extended, in the coding step, to 1024x512 pixels (which are the immediately greater dimensions which are powers of two). Now let us assume that a portion measuring 400x400 pixels is cropped from the watermarked image. In the decoding step, the first extension made will be to 512x512 pixels, but the watermark will not be detected; the detection will then be attempted with the other specified dimensions until the correct extension is identified, this being the only extension for which the detection can be successful.

The operation of expanding the luminance image is shown in Fig. 2, where the luminance image measuring 400x600 pixels is expanded with the aid of two black lateral strips to a size of 1024x1024 pixels.

As will be explained in the following paragraphs, a transform in the frequency domain and (in the example described) a discrete Fourier transform will be applied to the expanded luminance image. The actual watermark is applied to the matrix of the coefficients of the transform which is thus obtained - or rather to a subset of these coefficients - and the process then continues to the next step of inverse transformation and reinsertion of the watermarked luminance image into the original image, following masking to eliminate (or reduce) the visibility of the watermark in the final image. The watermark is applied only to the modulus and not additionally to the phase of the coefficients selected from the matrix.

The watermark consists of a sequence of pseudo-random numbers generated by a pseudo-random real number generator, described in the following paragraph.

Pseudo-random real number generator

A pseudo-random real number generator is a structure which, receiving at its input what is called a "starting seed", s0, produces at its output a (pseudo-random) sequence of real numbers with specific statistical properties. The seed s0 represents the initial state of the generator, which changes to a successive state whenever it generates a new number in the sequence. Since the number of states which the generator may enter is finite, after a certain number of passes (in other words, of generated numbers) it will return to a state in which it has already been. Consequently, the sequence produced will inevitably be periodic, and can therefore be recognized and predicted after observation for a sufficient time. It will be understood, therefore, that the primary characteristics of a good generator is that it has the longest possible period, in order to make the observation time required to recognize the sequence produced as long as possible.

In particular, linear congruence generators (LCG) are used, since they require very few operations, and are therefore very fast.

An LCG is defined by the recursive law:

$$sn=(asn-1)mod\ m$$

where sn is the nth output generated, s0 is the starting seed, and m>0, a>0 are integers called, respectively, the modulus and the multiplier. In particular, m-1 represents the length of the period of the sequence generated: it is therefore desirable for this to be as large as possible, giving rise to difficulties in implementation.

A practical method of implementing an LCG with a large modulus m and multiplier a consists in combining different LCGs with smaller moduli and multipliers.

In the case in question, four different LCGs are used, producing a unique sequence xn = zn/m, where:

$$z_n = \left( \sum_{j=1}^{4} (-1)^{j+1} s_{j,n} \right) \bmod m$$

$$m = \prod_{j=1}^{4} m_j$$

The moduli mj of the four LCGs have been selected in such a way as to produce. for the combined generator, a period of approximately 2121.

The generated sequence of real numbers has a uniform distribution in the range [0, 1]. This sequence is subsequently scaled and translated into the range [ -1,1] to give it a mean of zero.

The pseudo-random sequence which forms the watermark is identified uniquely from the input seed supplied to the generator. In the example in question, the seed of the generator CLCG is a sequence of four positive integers, each of which is the seed of a different LCG:

$$S = \{s1, s2, s3, s4\}$$

The quadruple S is obtained by means of a suitable encoding of two strings: one alphabetic, CL, and one numeric, CN.

The alphabetic string CL consists of a maximum of 16 characters belonging to the following alphabet of 32 symbols:

$$AL = \{space,a,b,.....,z,A,B,.....,Z,.,\&,/,@,\_\}$$

The numeric string CN consists of a maximum of 8 characters belonging to the following alphabet of 16 symbols:

$$AN = \{space,0,.....,9,.,",",/,\$,£\}$$

where "," indicates the comma character.

Each character belonging to the string CL is encoded with 5 bits, while each character belonging to the string CN is encoded with 4 bits, according to suitable conversion tables. The values obtained from this encoding are grouped into 4 vectors which, when suitably processed, make up the quadruple of seeds S required by the pseudo-random number generator to produce (in the watermarking step) and reproduce (in the watermark detection step) the watermarking sequence. The whole process described above for generating the watermark by means of the two strings CL and CN is illustrated in the diagram in Fig. 3.

However, alternative methods to that described for associating a pseudo-random sequence (which is to be inserted into the image) with an alphanumeric string can be used without adversely affecting the operation of the watermarking system which has been described.

Luminosity mask

As mentioned in the introductory section, the watermarking method which is provided operates in the frequency domain: the watermark is inserted into the moduli of the coefficients of the Fourier transform of the luminance image. This characteristic makes the watermark more resistant to geometrical processing to which the watermarked image may be subjected, since the watermark is diffused uniformly throughout the image. On the other hand, a method which operates in the transform domain cannot make allowance for the characteristics of the human visual system.

As will be explained in greater detail subsequently, in each image there are areas (for example those of uniform luminosity) in which the watermark is easily visible and disturbs the quality of the image, and areas (those rich in details, for example the foliage of a tree) in which the human eye cannot easily perceive the presence of the watermark. Watermarking in the transform domain and then distributing the watermark in a uniform way throughout the spatial image obtained by inverse transformation may, depending on the type of image, give rise to a degradation of quality, since the presence of the watermark is perceived by the human eye at the points of greater uniformity (small variations of the gray tonality) of the illuminance image. To avoid this problem, the total energy of the watermark can be decreased until it becomes imperceptible in the final image. However, this leads to a loss of robustness of the watermark.

To avoid this problem, the present method provides for the creation, from the luminance image, of a sensitivity mask (or map) image, whose purpose is to indicate the areas of the image in which the human eye is more sensitive to disturbances introduced by the watermark. By means of an arithmetical operation carried out pixel by pixel in the spatial domain, according to the values taken by the sensitivity mask, the watermarked image and the original image are "mixed", part of the watermark being removed only from the areas (indicated by the sensitivity mask) in which it causes the greatest disturbance.

The sensitivity mask is a black and white image, having the same dimensions as the original image, and therefore as the luminance image, which appears light in the areas in which the human eye is more sensitive to any disturbances, and dark in the areas in which the watermark can be inserted, even at higher energy, without compromising the visual quality of the image, since the human eye is less sensitive to any disturbances in these areas.

The sensitivity mask is formed (Fig. 1, block 113) by processing the luminance image Y obtained from the image I to be watermarked. To form it, use is made of the knowledge of the characteristics of the human visual system; in particular, there are two phenomena which affect the perception of disturbances by the human eye, namely:

-   sensitivity to contrast;
-   the masking effect.

The term "sensitivity to contrast" denotes the visibility of a sinusoidal grid superimposed on a uniform background. It depends on the frequency of the sinusoid, its amplitude and the gray level of the background. Fig. 4 shows a curve of the sensitivity of the human eye to the sinusoidal grating as a function of the gray level of the background. The sensitivity curve S(L) shows how the sensitivity of the eye is higher at the intermediate gray levels, meaning that the watermark should not be inserted in these areas, while it is lower in the very light or very dark areas of the image, which are therefore those more suitable for the insertion of the watermark.

The masking effect, on the other hand, relates to another important property of the human visual system: any light stimulus is more difficult to perceive if it is superimposed on a non-uniform background, particularly on a background which has spatial frequencies close to those of the stimulus itself.

By using the characteristics described above, it is possible to construct a sensitivity mask which has the object of concentrating the watermark in the areas in which it is more difficult to perceive it, and of "lightening" or eliminating the disturbances created by the watermark in the areas in which the sensitivity of the human eye is greater.

From a knowledge of the characteristics of the human visual system, it is found that the eye is less sensitive, in relation to the introduction of any degradation of the image, in the areas of the image which have a certain activity, in the sense of a variation of gray levels (for example in the outlines) of the luminance image.

The sensitivity mask can therefore be calculated by a very large number of methods. A possible implementation is presented here, based on the estimation of the local variance. However, alternative implementations will not prejudice the operation of the system described.

The activity of the image can be translated into, and quantified in terms of, a high spatial variance within a specific portion of the image.

If we consider a "window" Wi,j of suitable dimensions (for example, 9x9 pixels), centered on the pixel having coordinates i, j of the luminance image, and if we denote by Dim[Wi,j] the number of pixels contained in it, the local variance within it can be calculated thus:

$$\sigma_{i,j}^2 = \frac{1}{Dim[W_{i,j}]} \sum_{x,y \in W_{i,j}} [Y(x,y) - \mu_{i,j}]^2$$

where Y(x,y) denotes the value of the pixels having coordinates (x,y) of the luminance image, and $\mu_{i,j}$ denotes the mean value of the pixels of the window:

$$\mu_{i,j} = \frac{1}{Dim[W_{i,j}]} \sum_{x,y \in W_{i,j}} Y(x,y)$$

By making the window slide continuously over the luminance image, the values of the sensitivity map are obtained, by progressively replacing the central pixel of the window with the value of the calculated variance within it. Thus we obtain a negative map image, in other words one in which the lighter areas represent areas of the image having a high variance, which can therefore be modified without this degradation being perceivable by the human eye. The next step consists in inverting the values of the map to create the actual sensitivity mask. As a result of this inversion, dark areas of the map correspond to the areas of the image with high activity, and vice versa.

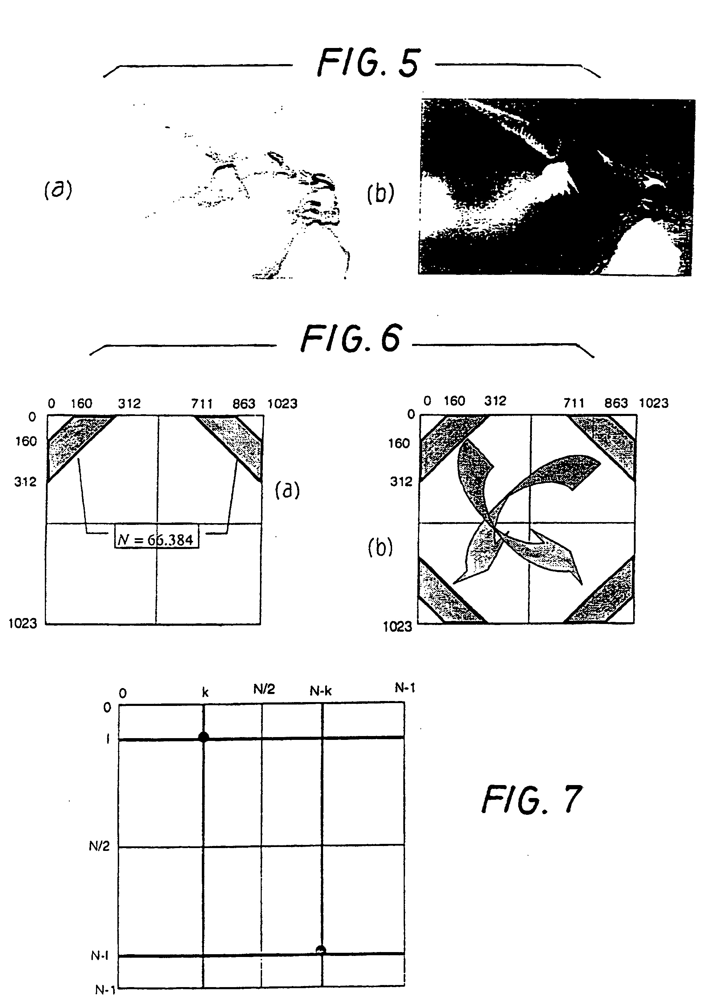

Fig. 5(a) shows an example of a sensitivity map or mask formed from the luminance of the image of Fig. 5(b).

When the sensitivity mask M has been formed from the luminance Y, the mean value of the gray levels is calculated by the formula:

$$\overline{M} = \frac{1}{K \times L} \sum_{n=0}^{K \times L - 1} P_n, \qquad \overline{M} \in [0,1]$$

where K and L are. respectively, the numbers of rows and columns of the luminance image (and therefore also of the sensitivity mask) and pn are the values of the gray levels of the pixels of the mask, which are considered to be normalized at the maximum gray level. 1.

The value of $\bar{M}$ is used at the time of watermarking for calculating the energy of the watermark, as will be explained subsequently.

Alternative methods can be used to produce the sensitivity mask.

Watermarking

The actual watermarking process is represented by block 115 in Fig. 1. It represents the step which takes place in the transform domain, in other words on the matrix of coefficients obtained by the transformation of the luminance image, and which consists in modifying the moduli of the transformed coefficients of the luminance by inserting the watermark.

The discrete Fourier transform, DFT (Fig. 1, block 114), is applied, using the fast calculation algorithm, FFT, for example, to the luminance image Y which has previously been extended to 1024x1024 pixels (block 109 of Fig. 1). The 1024x1024 coefficients formed by the discrete Fourier transform are represented in the modulus-phase form. The watermarking operation, for reasons which will be explained subsequently, relates only to the matrix of the moduli of the DFT coefficients: the terms to be modified by the watermarking code are selected from this. As mentioned above, it is theoretically possible, but not practical, for this selection to consist simply in taking all the coefficients of the matrix into consideration.

One of the preferred characteristics for a watermarking system is the possibility, at the time of detection, of recovering the watermark imprinted into the image without making use of the original image: to make this possible, the position of the watermark within the spectrum of the discrete Fourier transform of the luminance image must be known at the time of detection.

For this reason, both the number and the positions of the moduli of the DFT coefficients to be watermarked are specified a priori. For example, a possible selection covers 66,384 elements belonging to the area of the spectrum at intermediate frequencies: this selection enables a good compromise to be achieved between the opposing requirements of robustness and invisibility of the watermark. This is because. in order for the watermark to be imperceptible to the human eye, it would be preferable to insert it into the high-frequency area of the DFT spectrum. On the other hand. in order to achieve a degree of robustness to the more common types of processing which tend to alter the high frequencies (JPEG compression, low-pass filtering, median filtering, etc.), the most suitable position for the watermark is the low-frequency area. Consequently, a watermark placed in the intermediate frequency area enables both requirements to be partially met. The robustness is assured by the number of coefficients which are watermarked (approximately 6% of the total).

Fig. 6(a) shows schematically the matrix of the DFT modules of a 1024x1024 transformed image obtained by the transformation of a luminance image, showing the areas of the spectrum subjected to watermarking, in other words the selected coefficients.

The selected coefficients are extracted from the matrix, modified by the insertion of the watermark, and finally reinserted into their original positions within the matrix of the DFT modules. The reinsertion of the coefficients has to be carried out while maintaining the properties of the bidimensional DFT, particularly the properties of conjugate symmetry. If the DFT matrix of the image is denoted as F(k,l), then:

$$F(k,l) = F^*(N-k,N-l)$$

$$k,l = 0...N-1; \tag{1.1}$$

From (1.1) it is clear that:

$$|F(k,l)|=|F(N-k,N-l)|$$

$$k,l = 0...N-1; \tag{1.2}$$

This property is shown in Fig. 7. In order for (1.2) to be true in the DFT of the watermarked image as well, the watermarked terms must also be reinserted into the symmetrical area of the spectrum (Fig. 6(b)).

The algorithm used for the watermarking is of the addition-multiplication type and, as mentioned above, is applied only to the moduli of the selected DFT coefficients. This is because the modulus of the DFT has the important property of translation invariance: if F(k,l) is the DFT of the image Y, and Y'(k,l) is the matrix produced by the cyclic translation of m rows and n columns of Y(k,l), we find that:

$$F'(k,l) = F(k,l)e^{-j\frac{2\pi}{N}mk}\ e^{-j\frac{2\pi}{N}nl}$$

in other words, the translation has caused only a phase rotation of the DFT; the modulus has remained unchanged.

This property is of fundamental importance for the provision of a watermarking system which is robust even in the presence of cropping of subsections of the image. This is because, at the time of recovery of the watermark, since it is assumed that the original image is not available, it is impossible to know whether the image under examination has the same dimensions as that which was watermarked or if it is only a subsection of the latter. Moreover, even if the image under examination is known to be a sub-section, it is impossible to locate the portion of the image in the correct position within the black background (with dimensions of 1024x1024 pixels), since it cannot be compared with the original.

The translation invariance of the DFT moduli makes it possible to recover the watermark even in these conditions: the image received at the decoding stage is superimposed on a black image with dimensions of 1024x1024, without consideration of its position in relation to the background, as will be explained subsequently with reference to Fig. 10(b).

The following watermarking algorithm is used:

$$y'i = yi + \alpha miyi$$

where y'i is the modulus of the i-th watermarked coefficient, yi is the corresponding non-watermarked coefficient, mi is the i-th coefficient of the watermark, and $\alpha$ is the energy of the watermark. As the energy $\alpha$ increases, the watermark becomes more robust to processing. On the other hand, a high energy results in greater visibility of the watermark.

The value of $\alpha$, with which the image is watermarked in a uniform way, is not selected directly, but is calculated from the mean value of the gray levels of the sensitivity mask $\overline{M}$, and from the value of "mean energy" $\alpha m$ desired for the watermark:

$$\alpha = \frac{\alpha_m}{1 - \overline{M}}$$

The value selected at the time of watermarking is in fact the mean energy $\alpha m$: this preferably has a value in the range [0.1; 0.2] and represents the mean energy desired for the watermark on the image on exit from the whole watermarking process (Fig. 1).

The transformed image, in other words the image obtained by applying the DFT to the luminance image Y, is therefore watermarked with a uniform energy $\alpha$. When the inverse discrete Fourier transform IFFT (Fig. 1, block 117) is applied, a degraded watermarked luminance image Y' is obtained, in other words one in which the applied watermark has caused a degradation and a loss of quality. This is because, since $\alpha>\alpha m$ (indicative values are $\alpha m = [0.1;0.2]$ and $\alpha = [2;7]$), the applied watermark is found to have excessive energy, at least in those areas of the image in which the human eye can easily perceive the presence of alterations of the original image.

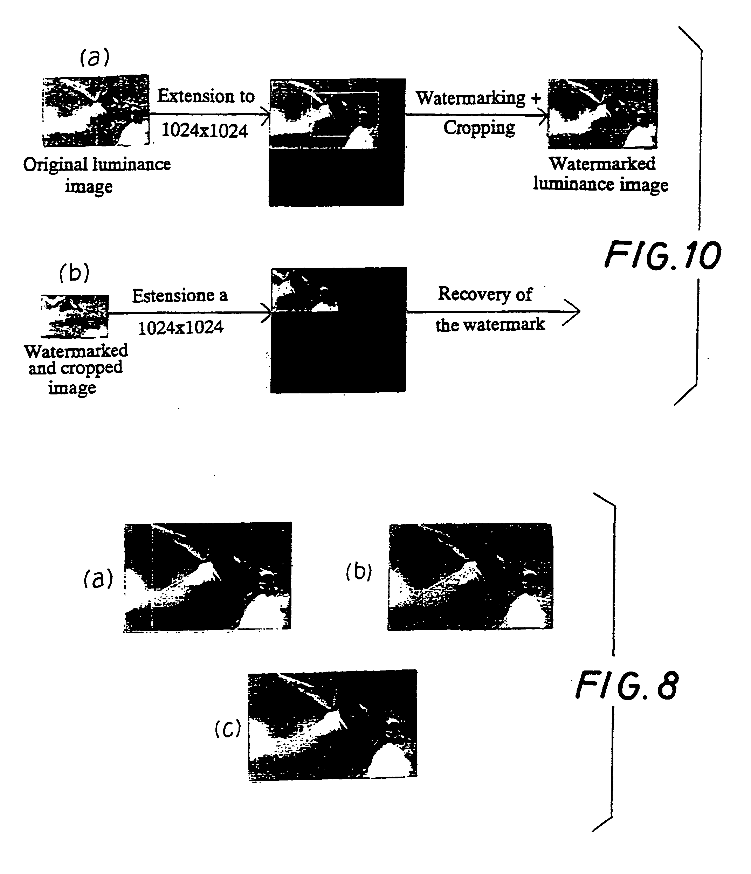

This can be shown by a comparison of Figs. 8(a), (b) and (c), where, more particularly, Fig. 8(a) shows the luminance image before watermarking and Fig. 8(b) shows the luminance image after watermarking with uniform energy. In order to make the watermark virtually invisible in the watermarked luminance image, the latter is subjected to masking, as described below, producing an image as shown in Fig. 8(c), which is practically identical to the original image of Fig. 8(a).

The step of spatial masking, in other words the "elimination" of the excess watermark from the areas in which it most disturbs the quality of the image (in areas of uniform luminosity, for example) is carried out by means of a suitable combination of the watermarked luminance image Y' and the sensitivity mask M determined as described above. The procedure is described below and represented by block 119 of Fig. 1. It is preceded by a cropping of the watermarked illuminance image obtained by the inverse transformation (block 117, Fig. 1) to the original dimensions of the illuminance image, in other words those preceding the expansion indicated by block 109 of Fig. 1. The cropping to the original dimensions is represented by block 118 of Fig. 1.

Spatial masking

Given Y' (the luminance image watermarked with a watermark of uniform energy $\alpha$) and M (sensitivity mask), we can proceed to carry out the masking operation, which takes place pixel by pixel in the spatial domain, to obtain the watermarked and masked luminance image YM. This is obtained from the luminance image watermarked at uniform energy (Y')

$$YM = MY + (1-M)Y'$$

where M is assumed to be normalized between 0 and 1. and Y is assumed to be the original luminance image, in other words that preceding the DFT transform.

It should be noted that, at the points in which M = 0 (in other words, in the areas in which the mask appears black), the watermark energy is maximum (equal to $\alpha$) and YM = Y'; conversely, at the points at which M = 1 (in other words, in the areas in which the mask is white), the watermark energy is zero, and YM = Y. Fig. 8 shows the images Y (Fig. 8(a)), Y' (Fig. 8(b)) and YM (Fig. 8(c)): it should be noted that the watermark is perceivable in Y', whereas it cannot be seen in YM even when this is compared with the original Y.

The watermarked luminance image YM (Fig. 1, block 120) is obtained by the watermarking operation described above: to recover the colored watermarked image, YM has to be reinserted into the original image I. YM is therefore recombined with the two chrominance components (Fig. 1, block 122) which have remained unchanged by the watermarking process. By carrying out an exchange of coordinates which is the inverse of that executed at the start of the diagram, the three components RM, GM, BM forming the final watermarked image are recovered. The appropriate inverse transform is used, according to the type of exchange of coordinates which was used to extract the luminance image Y:

$$R_M = Y_M(C_2 - 0.5C_1)$$

$$G_M = Y_M[1-C_2-(C_1/2)]$$

$$B_M = Y_M C_1$$

$$\begin{pmatrix} R_M \\ G_M \\ B_M \end{pmatrix} = \begin{pmatrix} 2.751 & -1.146 & -0.426 \\ -1.116 & 2.025 & 0.032 \\ 0.137 & -0.333 & 1.104 \end{pmatrix} \begin{pmatrix} X \\ Y_M \\ Z \end{pmatrix}$$

$$\begin{pmatrix} R_M \\ G_M \\ B_M \end{pmatrix} = \begin{pmatrix} 1 & 0.956 & 0.621 \\ 1 & -0.272 & -0.647 \\ 1 & -1.106 & -1.703 \end{pmatrix} \begin{pmatrix} Y_M \\ I \\ Q \end{pmatrix}$$

Introduction of timing

It has been emphasized a number of times that a good electronic watermarking system must be capable of recovering the watermark without using the original image, even where there are geometrical distortions of the watermarked image. Although robustness to the cropping of portions of the image is provided by watermarking the moduli of the DFT coefficients of the transformed luminance image, there is nothing to provide equal robustness when the image is scaled or rotated (even through a few degrees). This is because these operations modify the spectrum of the image in such a way as to make the watermark irrecoverable.

Clearly, in order to be able to identify the transformations which the image has undergone, precise data about the image are required: for example, if the observed image is rectangular, and it is known that this image was originally square, the determination of the transformations which it has undergone is immediate. However, the proposed system assumes that the original image is not known.

The method of watermarking according to the present invention therefore provides an additional step preceding the spatial watermarking of the luminance image. This additional step consists in the introduction of what is known as timing (block 121, Fig. 2).

The solution adopted for recovering the introduction of the timing consists in introducing into the watermarked image a timing signal (or "pattern") whose recovery, during decoding, makes it possible to determine the original dimensions of the image, thus enabling the geometrical transformations undergone since the moment of application of the watermark to be reversed (partially if necessary).

The reference pattern, which is added pixel by pixel to the watermarked image, has to withstand the extraction of subsections, and must not visibly degrade the image to which it is added.

Various timing patterns may be chosen; of these, the use of a periodic signal of the sinusoidal type appears to be the most appropriate solution. When the (known) frequency of the sinusoidal components of the original timing signal is compared to those of the signal recovered at the time of decoding, it is possible to determine the geometrical transformations which have been applied to the image after the insertion of the watermark and, if necessary, to reverse them to permit the actual decoding to take place. Alternatively, any periodic signals can be used, for example a rectangular checkerboard, in which case the geometrical transformations applied to the image are identified by extracting the principal harmonics of the timing signal and comparing them with the original values.

Further details of the system of introducing timing can be found in DJ. Fleet and DJ. Heeger, "Embedding invisible information in color images", Proc. of ICIP '97, IEEE International Conference on Image Processing, Santa Barbara, CA, USA, October 26-29, 1997, vol. I, pp. 532-535.

The invisibility of the timing pattern, which must be ensured together with the invisibility of the watermark, is obtained by inserting the timing at intermediate frequencies. Additionally, since the spectral components of the pattern are generally peaks having a rather high value, whereas the spectrum of the image takes high values only in the proximity of the continuous component, the spectrum of the total image will still have peaks at the positions of the impulses provided by the reference pattern, which will therefore be easily identifiable during decoding, even in the presence of geometrical distortions.

B. PROCESS OF DECODING AND DETECTING THE WATERMARK

At the watermark detection stage, the aim is to determine whether or not a certain known watermark is present in a supposedly watermarked image (in the case of a detectable method). The decoding operation could, for example, fall within the remit of an authority which has the task of identifying counterfeit and unauthorized copies of a certain digital image. This operation, therefore, must be fast, must ensure a very low probability of errors, and must not require the availability of the original image.

The decoding and detection method according to the present invention operates without making use of the original image. This is made possible by the fact that the area of the DFT spectrum subjected to watermarking is the same for each image, and is known at the time of decoding. The detector is capable of determining whether a certain known watermark is present in the image under examination, simply by comparing a detection function with a suitably calculated threshold value.

As regards the probability of error, the detector is excellent according the Neyman-Pearson statistical decision criterion: in other words. when a probability of false alarm has been specified (in this case it is set at 10-6), the detector minimizes the probability of failure detect the watermark.

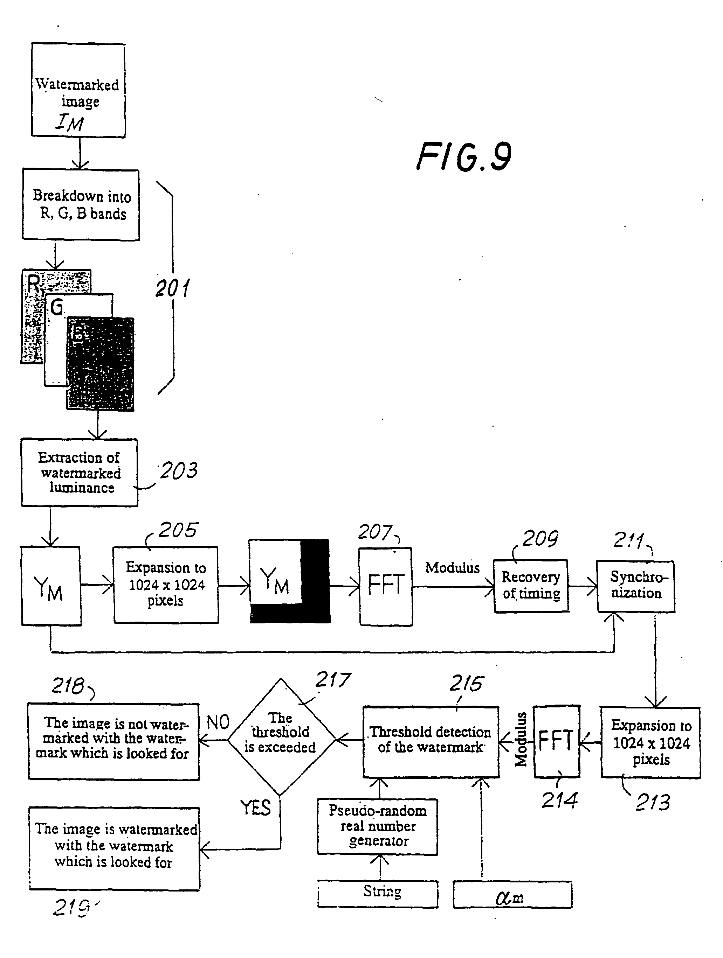

The main steps of the detection process are described below with reference to the block diagram in Fig. 9.

Breakdown into the R.G.B bands and extraction of the watermarked luminance

The watermarked color image IM is broken down into the three color components RM, GM, BM (block 201 of Fig. 9), using the same transformation as that used in the watermarking process. In this way, the luminance component YM, in which the watermark will be searched for, is extracted, together with the two chrominance components C1M and C2M, using the same transformation as that used for the insertion of the watermark, for example one of the following:

$$Y_M = (R_M + G_M + B_M)/3$$

$$C_{1M} = B_M/Y_M$$

$$C_{2M} = (2R_M + B_M)/(2Y_M)$$

$$\begin{pmatrix} Y_M \\ I_M \\ Q_M \end{pmatrix} = \begin{pmatrix} 0.299 & 0.587 & 0.114 \\ 0.596 & -0.274 & -0.322 \\ 0.211 & -0.523 & 0.312 \end{pmatrix} \begin{pmatrix} R_M \\ G_M \\ B_M \end{pmatrix}$$

$$\begin{pmatrix} X_M \\ Y_M \\ Z_M \end{pmatrix} = \begin{pmatrix} 0.476 & 0.299 & 0.175 \\ 0.262 & 0.656 & 0.082 \\ 0.020 & 0.161 & 0.909 \end{pmatrix} \begin{pmatrix} R_M \\ G_M \\ B_M \end{pmatrix}$$

The step of extracting the watermarked luminance image YM is represented by block 203 in Fig. 9.

Expansion to 1024x1024 pixels

The watermarked luminance image YM is extended, by the addition of a black border, to 1024x1024 pixels (block 205 of Fig. 9): this change is necessary for the application of the algorithm for the fast calculation of the discrete Fourier transform, the FFT, in order to enable the timing to be recovered.

The extended image is transformed into an image in the frequency domain by the DFT transform, as shown schematically by block 207 of Fig. 9.

It should be noted that the decoding step requires two expansions of the image: this first expansion is used only for recovering the timing signal. The next expansion, on the other hand, will be used for recovering the watermark.

Recovering the timing and synchronization

When the FFT transform of the watermarked luminance image YM has been executed, the modulus of its spectrum is analyzed in such a way as to identify its peaks of higher amplitude. These peaks indicate the frequency and orientation which the spectrum of the reference pattern on the watermarked image has assumed.

If the detected frequency peaks have coordinates different from those which were introduced during watermarking, it may be deduced that the image under examination has been subjected to attacks of the geometric type (for example, rotations) or resampling ("zooms", for example). In particular, not only the type of processing undergone by the image, but also its extent, can be deduced from the differences which are found. For a more precise description of the way in which the parameters of the geometrical transformations undergone by the image can be estimated from the positions of the timing peaks detected in the watermarked image, see, for example, D.J. Fleet and D.J. Heeger, "Embedding invisible information in color images", Proc. of ICIP '97, IEEE International Conference on Image Processing, Santa Barbara, CA, USA, October 26-29,1997, vol. I, pp. 532-535.

The next step consists in resynchronizing the image, in other words reversing the geometrical transformations, returning the image to its original characteristics in terms of angular position and sampling interval. If, for example, the timing recovery has revealed a rotation of 2° with respect to the original, the opposite rotation is imparted to the image YM, to return to an image geometrically identical to that present at the exit from the watermarking process.

The steps of timing recovery and synchronization are shown schematically by blocks 209 and 211 of Fig. 9. It should be noted that synchronization (block 211) is carried out on the luminance image YM and not on the transformed image, which is used in block 209 solely for the purpose of identifying any geometrical transformations undergone by the image under examination with respect to the original image.

Expansion to 1024x1024 pixels

By analyzing the timing grid, it is possible to obtain information on the sampling interval and on the angular position of the image as it left the watermarking process, without having to make a comparison with the original image.

However, something that cannot be deduced in any way in the absence of the original is the content of the original image itself. In other words, it is impossible to know whether or not the image under examination is only a portion of that which left the watermarking process. To avoid this problem, the image is returned, before the watermark is decoded, to the reference dimensions of 1024x1024 pixels, in other words to the dimensions to which the image was extended at the time of watermarking. This forms the second stage of expansion to 1024x1024 of the decoding process, indicated by block 213 of Fig. 9.

It should be noted that, of the two expansion operations executed during decoding, only the latter one relates to the recovery of the watermark: the previous expansion was used solely for the recovery of the timing.

The luminance image expanded to 1024x1024 pixels obtained in the step represented by block 213 is then transformed by the discrete Fourier transform, DFT (block 214), to obtain the transformed image on which the watermark detection is carried out.

Threshold detection of the watermark

The problem of decoding the watermark is posed in the following terms: given a luminance image YM, extracted from the color image IM, the aim is to determine whether a certain known watermark m* is present in the luminance image YM.

At the time of decoding, both the positions of the watermarked coefficients within the DFT spectrum, in other words within the transformed image obtained by transformation of the luminance image YM, and their number are known: this is because these parameters are fixed at the time of watermarking.

The following are present at the input of the detector (block 215 of Fig. 9):

- the vector y' = {y'i}i=0...N-1 of the watermarked coefficients
- the watermark m* = {m*i}i=0...N-1 whose presence is to be tested
- the mean energy of the watermark, $\alpha$m

where, for example, N = 66,384, is the number of the watermarked coefficients, and therefore also that of the coefficients of the watermark; the vector y' is extracted from the matrix of the DFT moduli of the watermarked image YM, using the same criterion as that used during the watermarking. The watermark m* is produced by the pseudo-random generator on the basis of the string (alphabetic and numeric) supplied to its input, and the energy $\alpha$m is assumed to be known, since it is also a specified parameter in the watermarking criteria.

Where the generation of the watermark m* in particular is concerned, it should be remembered that the pseudo-random generator always reproduces the same sequence if the same seeds are supplied to its input; in this sense, the watermark can be identified with the seed.

The next step consists in using a detection function L, which depends on the aforesaid three inputs, and a threshold value $\lambda$ such that:

- if L > $\lambda$, the watermark m* is considered to be present;
- if L < $\lambda$, the watermark m* is considered to be absent;

For the selection of the detection function L, and the threshold value $\lambda$, use was made of statistical decision theory; in particular, the Neyman-Pearson criterion was used, giving:

$$L(y) = \sum_{i=0}^{N-1}\left[-\beta_i \ln\left(1+\alpha_m m_i^*\right)\right] + \sum_{i=0}^{N-1}\left[-\left(\frac{y_i}{\alpha_i\left(1+\alpha_m m_i^*\right)}\right) + \left(\frac{y_i}{\alpha_i}\right)^{\beta_i}\right]$$

$$\lambda = 3.3\sqrt{2\sum_{i=0}^{N-1}\left[\frac{\left[\left(1+\alpha_m m_i^*\right)^{\beta_i}-1\right]}{\left(1+\alpha_m m_i^*\right)^{\beta_i}}\right]^2} + \sum_{i=0}^{N-1}\left\{\frac{\left[\left(1+\alpha_m m_i^*\right)^{\beta_i}-1\right]}{\left(1+\alpha_m m_i^*\right)^{\beta_i}}\right\} - \sum_{i=0}^{N-1}\left[\beta_i \ln\left(1+\alpha_m m_i^*\right)\right]$$

where m* = {m*i}i=0...N-1 is the watermark whose presence is to be checked, $\alpha_m$ is the mean energy of the watermark, $\alpha_i$ and $\beta_i$ are the statistical parameters which describe the variation of the generic modulus of the watermarked coefficient, $y_i$.

The step of comparing the value of the detection function L with the threshold value is shown schematically in block 217 of Fig. 9, whose outputs are represented by blocks 218 (negative output: the watermark has not been detected) and 219 (positive output: the watermark has been detected).

It should be noted that, in order to find the detection function L(y), it is necessary to know the statistics of the moduli of the DFT coefficients of digital images.

From a statistical study of an archive of non-watermarked images, it was found that the modulus of each DFT coefficient $y_i$ follows a statistic of the Weibull type with parameters $\alpha_i$ and $\beta_i$: for the generic coefficient $y_i$, the following is true:

$$f\left(y_i\right)=\frac{\beta_i}{\alpha_i}\left(\frac{y_i}{\alpha_i}\right)^{\beta_i-1}\exp\left\{-\left(\frac{y_i}{\alpha_i}\right)^{\beta_i}\right\} \qquad (2.1)$$

Strictly speaking, the coefficients $\alpha$, $\beta$ should be estimated for each coefficient of the spectrum within the area affected by the watermark. To simplify the decoding and to permit the estimation of the parameters directly on the watermarked image, it is assumed that the moduli of the DFT coefficients of the watermarked image belonging to small areas of the spectrum follow the same statistic, in other words that their distribution is described by the same parameters. In this connection, the area of the DFT spectrum affected by the watermarking (see also Fig. 6(a) and 6(b)) is divided into a certain number of parts, for example 16 (Fig. 11): the pair of parameters $\alpha$, $\beta$ (assumed to be constant within each area) is estimated for each of these groups of coefficients. As stated above, the parameters of the distribution within each area are estimated directly for the watermarked image, using one of the traditional criteria used in statistics, for example those described in Papoulis, Probability and statistics, London, Prentice Hall International, 1990. Entirely satisfactory results can be obtained by using the maximum likelihood criterion. Alternatively, an estimate of the least squares type can be used. To summarize, the process of decoding the watermark can be described schematically as the following steps:

- generating the watermark m* whose presence is to be checked
- estimating the parameters $\alpha$, $\beta$ for the regions (for example the 16 regions of Figure 11) into which the watermarked area of the spectrum is divided
- calculating the function L(y) and the threshold $\lambda$
- comparing L(y) with $\lambda$
- decision

The detector which is implemented is capable of identifying the presence of the watermark even in seriously degraded images. In particular, the recovery of the watermark is possible even in the presence of combined attack, such as rotation, zoom and JPEG compression, or extraction of a sub-image, zoom and median filtering, and the like.

**Claims**

**1.** A method of detecting the presence of a watermark in a digital image, comprising the following steps:

   a) acquiring the digital image;
   b) obtaining from said digital image, by the application of a transform, a matrix of coefficients of a transform;
   c) selecting a group of said coefficients;
   d) determining a detection function (L) which is dependent on the watermark which is to be detected in said digital image;
   **characterised by**
   e) calculating a single value of said detection function for all the coefficients of said group of selected coefficients of said matrix of coefficients;

f) determining whether or not the digital image includes said watermark, according to the calculated value of said detection function (L).

2.  The method as claimed in claim 1, additionally comprising the steps of:

    a') defining a threshold ($\lambda$) which is a function of said watermark;
    b') calculating one single value of said threshold for the selected coefficients of said matrix of coefficients;
    c') comparing the value of said threshold with the calculated value of said detection function, and determining from said comparison whether or not the digital image includes said watermark.

3.  The method as claimed in claim 1 or 2, in which said transform is a discrete Fourier transform.

4.  The method as claimed in claim 1 or 2 or 3, in which the watermark to be detected has the form:

    $$y'i = yi + \alpha mi\, yi$$

    where
    y'i is the modulus of the i-th watermarked coefficient;
    yi is the corresponding modulus before watermarking;
    mi is the i-th coefficient of the watermark; and
    $\alpha$ is the energy of the watermark.

5.  The method as claimed in claim 4, in which the generic modulus yi of the coefficient of said matrix is related to statistical parameters $\alpha i$ and $\beta i$, describing the variation at the modulus of said coefficient, by the relation:

    $$f\left(y_i\right) = \frac{\beta_i}{\alpha_i}\left(\frac{y_i}{\alpha_i}\right)^{\beta_i-1} \exp\left\{-\left(\frac{y_i}{\alpha_i}\right)^{\beta_i}\right\}$$

6.  The method as claimed in claims 4 and 5, in which said detection function is defined by

    $$L(y) = \sum_{i=0}^{N-1}\left[-\beta_i \ln\left(1+\alpha_m m_i^*\right)\right] + \sum_{i=0}^{N-1}\left[-\left(\frac{y_i}{\alpha_i\left(1+\alpha_m m_i^*\right)}\right) + \left(\frac{y_i}{\alpha_i}\right)^{\beta_i}\right]$$

    where
    m* = {mi*}=0...N-1, being the watermark whose presence is to be checked,
    N is the number of watermarked coefficients of said matrix,
    yi is the i-th watermarked modulus of said matrix,
    $\alpha m$ is the mean energy of the watermark,
    $\alpha i$ and $\beta i$ are statistical parameters which describe the variation of the generic modulus of the watermarked coefficient.

7.  The method as claimed in one or more of the preceding claims, in which the threshold value is defined by

$$\lambda = 3.3\sqrt{2\sum_{i=0}^{N-1}\left[\frac{\left[\left(+\alpha_m m_i^*\right)^{\beta_i}-1\right]}{\left(+\alpha_m m_i^*\right)^{\beta_i}}\right]^2 + \sum_{i=0}^{N-1}\left[\frac{\left[\left(+\alpha_m m_i^*\right)^{\beta_i}-1\right]}{\left(+\alpha_m m_i^*\right)^{\beta_i}}\right] - \sum_{i=0}^{N-1}\left[\beta_i \ln\left(+\alpha_m m_i^*\right)\right]}$$

in which

$m^* = \{m_i^*\}=0...N-1$, being the watermark whose presence is to be checked,

N is the number of watermarked coefficients of said matrix,

$\alpha m$ is the mean energy of the watermark,

$\alpha_i$ and $\beta_i$ are statistical parameters which describe the variation of the generic modulus of the watermarked coefficient.

8. The method as claimed in one or more of the preceding claims, in which said digital image is broken down in a preliminary stage into the corresponding chromatic components, and in which a spatial image to be decoded is determined from said chromatic components.

9. The method as claimed in claim 8, in which said spatial image to be decoded consists of one of said chromatic components.

10. The method as claimed in claim 9, in which the decoding and detection of the watermark are carried out on each of said chromatic components and in which the presence or absence of the watermark is determined according to a majority criterion based on the outcome of the detection of the watermark on the three components of the watermark.

11. The method as claimed in claim 8, in which a luminance image is determined from said chromatic components, and said transform is applied to said luminance image.

12. The method as claimed in one or more of the preceding claims, additionally comprising the step of selecting some of said coefficients of said matrix and calculating the value of the detection function and the threshold value for said coefficients only.

13. The method as claimed in one or more of claims 8 to 12, in which said spatial image to be decoded is expanded to a predetermined size, and said transform is applied to the expanded spatial image for the recovery of a timing, said timing being applied to the spatial image to be decoded to produce a timed spatial image.

14. The method as claimed in claim 13, in which said timed spatial image is expanded to a predetermined size, and said transform is applied to said expanded timed spatial image.

15. The method according to one or more of claims 4 to 7, in which the selected coefficients are divided into a plurality of small areas and in which said statistical parameters $\alpha_i$ and $\beta_i$ are assumed to be constant for each area.

16. A method for digital image watermarking, including the steps of:

   a) acquiring an original image to be watermarked;
   b) breaking down the original image into the three color components;
   c) defining, from said color components, a spatial image represented by a luminance image obtained from said color components by applying an invertible transform, or by said color components;
   d) expanding said spatial image to a predetermined size in order to obtain an expanded spatial image;
   e) applying to said expanded spatial image a transform for transforming the expanded spatial image in a matrix of coefficients of said transform;
   f) selecting a group of said coefficients;
   g) applying a watermark to the selected coefficients of the transform to obtain a watermarked coefficient matrix;
   h) applying an inverse transform to the watermarked coefficient matrix in order to obtain a watermarked spatial image;

i) bringing the watermarked spatial image back to the original size of the image before the image was expanded to said predetermined size;

j) introducing a timing pattern in said watermarked spatial image, said pattern making it possible, to determine the original size of the image if said image has been subjected to geometrical transformation;

k) reintroducing the watermarked and timed spatial image in the original image by applying a transform which is the inverse of said invertible transform used for obtaining said luminance image from said color components in step (c).

17. Method according to claim 16, wherein said spatial image is a luminance image obtained by combining said three color components.

18. Method according to claim 16 or 17, wherein the transform applied is a discrete Fourier transform (DFT).

19. Method according to claim 16, 17 or 18, wherein said watermark has the form

$$y'i = yi + \alpha mi\, yi$$

where

y'i is the modulus of the i-th watermarked coefficient;

yi is the corresponding modulus before watermarking;

mi is the i-th coefficient of the watermark; and

$\alpha$ is the energy of the watermark.

**Patentansprüche**

1. Verfahren vom Detektieren des Vorhandenseins eines Wasserzeichens in einem digitalen Bild, mit den folgenden Schritten:

a) Aquirieren des digitalen Bildes;

b) Gewinnen aus dem digitalen Bild, durch Anwendung einer Transformation, einer Matrix von Koeffizienten einer Transformation;

c) Auswahl einer Gruppe der Koeffizienten;

d) Bestimmen einer Detektionsfunktion (L), die von dem Wasserzeichen abhängt, das in dem digitalen Bild detektiert werden soll;

  **gekennzeichnet durch**

e) Berechnen eines einzelnen Wertes der Detektionsfunktion für alle Koeffizienten der Gruppe von ausgewählten Koeffizienten der Koeffizientenmatrix;

f) Feststellen, ob das digitale Bild das Wasserzeichen enthält oder nicht, gemäß dem berechneten Wert der Detektionsfunktion (L).

2. Verfahren nach Anspruch 1, das weiterhin die Schritte aufweist:

a') Definieren einer Schwelle ($\lambda$), welche eine Funktion des Wasserzeichens ist;

b') Berechnen eines einzelnen Wertes der Schwelle für die ausgewählten Koeffizienten der Koeffizientenmatrix;

c') Vergleichen des Wertes der Schwelle mit dem berechneten Wert der Detektionsfunktion, und Feststellen anhand des Vergleiches, ob das digitale Bild das Wasserzeichen enthält oder nicht.

3. Verfahren nach Anspruch 1 oder 2, bei dem die Transformation eine diskrete Fourier-Transformation ist.

4. Verfahren nach Anspruch 1 oder 2 oder 3, bei dem das zu detektierende Wasserzeichen die Form hat:

$$y'i = yi + \alpha mi\, yi$$

wobei

y'i der Modulus des i-ten mit Wasserzeichen versehenen Koeffizienten ist;
yi der entsprechende Modulus vor dem Anbringen des Wasserzeichens ist;
mi der i-te Koeffizient des Wasserzeichens ist; und
$\alpha$ die Energie des Wasserzeichens ist.

5. Verfahren nach Anspruch 4, bei dem der generische Modulus yi des Koeffizienten der Matrix mit den statistischen Parametern $\alpha$i and $\beta$i, die die Variation des Modulus des Coeffizienten beschreiben, verknüpft ist durch die Beziehung:

$$f(y_i) = \frac{\beta_i}{\alpha_i}\left(\frac{y_i}{\alpha_i}\right)^{\beta_i-1} \exp\left\{-\left(\frac{y_i}{\alpha_i}\right)^{\beta_i}\right\}$$

6. Verfahren nach Anspruch 4 und 5, bei dem die Detektionsfunktion definiert ist durch

$$L(y) = \sum_{i=0}^{N-1}\left[-\beta_i \ln\left(1+\alpha_m m_i^*\right)\right] + \sum_{i=0}^{N-1}\left[-\left(\frac{y_i}{\alpha_i(1+\alpha_m m_i^*)}\right) + \left(\frac{y_i}{\alpha_i}\right)^{\beta_i}\right]$$

wobei
m* = {mi*} = 0...N-1, das Wasserzeichen ist, dessen Vorhandensein geprüft werden soll,
N die Anzahl der mit Wasserzeichen versehenen Koeffizienten der Matrix ist,
yi der i-te mit Wasserzeichen versehene Modulus der Matrix ist,
$\alpha$m die mittlere Energie des Wasserzeichens ist,
$\alpha$i und $\beta$i statistische Parameter sind, die die Variation des generischen Modulus des mit Wasserzeichen versehenen Koeffizienten beschreiben.

7. Verfahren nach einem oder mehreren der vorangehenden Ansprüche, bei dem der Schwellenwert definiert ist durch

$$\lambda = 3.3\sqrt{2\sum_{i=0}^{N-1}\left[\frac{\left[\left(1+\alpha_m m_i^*\right)^{\beta_i}-1\right]^2}{\left(1+\alpha_m m_i^*\right)^{\beta_i}}\right] + \sum_{i=0}^{N-1}\left[\frac{\left[\left(1+\alpha_m m_i^*\right)^{\beta_i}-1\right]}{\left(1+\alpha_m m_i^*\right)^{\beta_i}}\right] - \sum_{i=0}^{N-1}\left[\beta_i \ln\left(1+\alpha_m m_i^*\right)\right]}$$

worin
m* = {mi*} = 0...N-1 das Wasserzeichen ist, dessen Vorhandensein geprüft werden soll,
N die Anzahl der mit Wasserzeichen versehenen Koeffizienten der Matrix ist,
$\alpha$m die mittlere Energie des Wasserzeichens ist,
$\alpha$i und $\beta$i statistische Parameter sind, die die Variation des generischen Modulus des mit Wasserzeichen versehenen Koeffizienten beschreiben.

8. Verfahren nach einem oder mehreren der vorangehenden Ansprüche, bei dem das digitale Bild in einem vorbereitenden Schritt in die entsprechenden chromatischen Komponenten zerlegt wird und ein zu dekodierendes Raumbild aus den chromatischen Komponenten bestimmt wird.

9. Verfahren nach Anspruch 8, bei dem das zu dekodierende Raumbild aus einer der chromatischen Komponenten besteht

10. Verfahren nach Anspruch 9, bei dem die Dekodierung und das Detektieren des Wasserzeichens mit jeder der chroinatischen Komponenten durchgeführt wird und das Vorhandensein oder Fehlen des Wasserzeichens anhand eines Mehrheitskriteriums bestimmt wird, welches auf dem Ergebnis der Detektierung des Wasserzeichens auf den drei Komponenten des Wasserzeichens beruht.

11. Verfahren nach Anspruch 8, bei dem aus den chromatischen Komponenten ein Luminanzbild bestimmt wird, und die Transformation auf das Luminanzbild angewendet wird.

12. Verfahren nach einem oder mehreren der vorangehenden Ansprüche, mit dem zusätzlichen Schritt der Auswahl einiger der Koeffizienten der Matrix und des Berechnens des Wertes der Detektionsfunktion und des Schwellenwertes nur für diese Koeffizienten.

13. Verfahren nach einem oder mehreren der Ansprüche 8 bis 12, bei dem das zu dekodierende Raumbild auf eine vorgegebene Größe expandiert wird und die Transformation auf das expandierte Raumbild angewendet wird, um einen Zeittakt zu gewinnen, wobei der Zeittakt auf das zu dekodierende Raumbild angewendet wird, um ein mit Zeittakt versehenes Raumbild zu erzeugen.

14. Verfahren nach Anspruch 13, bei dem das mit Zeittakt versehene Raumbild auf eine vorgegebene Größe expandiert wird und die Transformation auf das expandierte, mit Zeittakt versehene Raumbild angewendet wird.

15. Verfahren nach einem oder mehreren der Ansprüche 4 bis 7, bei dem die ausgewählten Koeffizienten in eine Mehrzahl kleinen Bereichen unterteilt werden und die statistischen Parameter $\alpha_i$ und $\beta_i$ für jeden Bereich als konstant angenommen werden.

16. Verfahren zum Anbringen eines Wasserzeichens an einem digitalen Bild, mit den Schritten:

a) Aquirieren eines Originalbildes, das mit Wasserzeichen versehen werden soll;
b) Zerlegen des Originalbildes in die drei Farbkomponenten;
c) Definieren anhand der Farbkomponenten eines Raumbildes, das repräsentiert wird durch ein Luminanzbild, das aus den Farbkomponenten durch Anwenden einer invertierbaren Transformation erhalten wurde, oder durch die Farbkomponenten selbst;
d) Expandieren des Raumbildes auf eine vorgegebene Größe, um ein expandiertes Raumbild zu erhalten;
e) Anwenden einer Transformation auf das expandierte Raumbild zum Transformieren des expandierten Raumbildes in eine Matrix von Koeffizienten der Transformation;
f) Auswahl einer Gruppe der Koeffizienten;
g) Anbringen eines Wasserzeichens auf die gewählten Koeffizienten der Transformation, um eine mit Wasserzeichen versehene Koeffizientenmatrix zu erhalten;
h) Anwenden einer inversen Transformation auf die mit Wasserzeichen versehene Koeffizientenmatrix, um ein mit Wasserzeichen versehenes Raumbild zu erhalten;
i) Zurückbringen des mit Wasserzeichen versehenen Raumbildes auf die Originalgröße des Bildes, bevor dieses auf die vorgegebene Größe expandiert wurde;
j) Einführen eines Zeittaktmusters in das mit Wasserzeichen versehene Raumbild, wobei das Muster es ermöglicht, die Originalgröße des Bildes festzustellen, wenn das Bild einer geometrischen Transformation unterworfen wurde;
k) Wiedereinführen des mit Wasserzeichen und Zeittakt versehenen Raumbildes in das Originalbild durch Anwenden einer Transformation, die das Inverse der invertierbaren Transformation ist, die für das Erhalten des Luminanzbildes aus den Farbkomponenten im Schritt (c) verwendet worden war.

17. Verfahren nach Anspruch 16, bei dem das Raumbild ein durch Kombinieren der drei Farbkomponenten erhaltenes Luminanzbild ist.

18. Verfahren nach Anspruch 16 oder 17, bei dem die angewendete Transformation eine diskrete Fourier-Transformation (DFT) ist.

19. Verfahren nach Anspruch 16, 17 oder 18, bei dem das Wasserzeichen die Form hat:

$$y'i = yi + \alpha mi\ yi$$

wobei

y'i der Modulus des i-ten mit Wasserzeichen versehenen Koeffizienten ist;
yi der entsprechende Modulus vor dem Anbringen des Wasserzeichens ist;
mi der i-te Koeffizient des Wasserzeichens ist; und
α die Energie des Wasserzeichens ist.

## Revendications

1.  Procédé de détection de la présence d'un filigrane dans une image numérique, comprenant les étapes suivantes consistant à :

    a) acquérir l'image numérique;

    b) obtenir à partir de ladite image numérique, en appliquant une transformée, une matrice de coefficients d'une transformée;

    c) sélectionner un groupe desdits coefficients;

    d) déterminer une fonction de détection (L) qui est fonction du filigrane qui doit être détecté dans ladite image numérique;
    **caractérisé en ce que**

    e) l'on calcule une valeur unique de ladite fonction de détection pour tous les coefficients dudit groupe de coefficients sélectionnés de ladite matrice de coefficients;

    f) l'on détermine si l'image numérique contient ou non ledit filigrane, selon la valeur calculée de ladite fonction de détection (L).

2.  Procédé selon la revendication 1, comprenant de plus les étapes consistant à :

    a') définir un seuil ($\lambda$) qui est une fonction dudit filigrane;

    b') calculer une valeur unique dudit seuil pour les coefficients sélectionnés de ladite matrice de coefficients;

    c') comparer la valeur dudit seuil avec la valeur calculée de ladite fonction de détection, et déterminer à partir de ladite comparaison si l'image numérique contient ou non ledit filigrane.

3.  Procédé selon la revendication 1 ou 2, dans lequel ladite transformée est une transformée de Fourier discrète.

4.  Procédé selon la revendication 1 ou 2 ou 3, dans lequel le filigrane à détecter a la forme :

$$y'i = yi + \alpha mi\ yi$$

où
y'i est le module du i-ème coefficient filigrané;
yi est le module correspondant avant le filigranage;
mi est le i-ème coefficient du filigrane; et
α est l'énergie du filigrane.

5.  Procédé selon la revendication 4, dans lequel le module générique yi du coefficient de ladite matrice est lié aux paramètres statistiques $\alpha i$ et $\beta i$, décrivant la variation au niveau du module dudit coefficient, par la relation :

$$f(y_i) = \frac{\beta_i}{\alpha_i} \left( \frac{y_i}{\alpha_i} \right)^{\beta_i - 1} \exp \left\{ - \left( \frac{y_i}{\alpha_i} \right)^{\beta_i} \right\}$$

**6.** Procédé selon les revendications 4 et 5, dans lequel ladite fonction de détection est définie par

$$L(y) = \sum_{i=0}^{N-1} \left[ -\beta_i \ln(1 + \alpha_m m_i^*) \right] + \sum_{i=0}^{N-1} \left[ -\left( \frac{y_i}{\alpha_i (1 + \alpha_m m_i^*)} \right) + \left( \frac{y_i}{\alpha_i} \right)^{\beta_i} \right]$$

où
m* ={mi*}=0....N-1, étant le filigrane dont la présence doit être vérifiée,
N est le nombre de coefficients filigranés de ladite matrice,
yi est le i-ème module filigrané de ladite matrice,
$\alpha$m est l'énergie moyenne du filigrane,
$\alpha$i et $\beta$i sont des paramètres statistiques qui décrivent la variation du module générique du coefficient filigrané.

**7.** Procédé selon l'une ou plusieurs des revendications précédentes, dans lequel la valeur seuil est définie par

$$\lambda = 3.3 \sqrt{2 \sum_{i=0}^{N-1} \left[ \frac{\left[ (1 + \alpha_m m_i^*)^{\beta_i} - 1 \right]}{(1 + \alpha_m m_i^*)^{\beta_i}} \right]^2 + \sum_{i=0}^{N-1} \left\{ \frac{\left[ (1 + \alpha_m m_i^*)^{\beta_i} - 1 \right]}{(1 + \alpha_m m_i^*)^{\beta_i}} \right\}} - \sum_{i=0}^{N-1} \left[ \beta_i \ln(1 + \alpha_m m_i^*) \right]$$

où
m*={mi*}=0...N-1, étant le filigrane dont la présence doit être vérifiée,
N est le nombre de coefficients filigranés de ladite matrice,
$\alpha$m est l'énergie moyenne du filigrane,
$\alpha$i et $\beta$i sont des paramètres statistiques qui décrivent la variation du module générique du coefficient filigrané.

**8.** Procédé selon l'une ou plusieurs des revendications précédentes, dans lequel dans une étape préliminaire ladite image numérique est décomposée en les composants chromatiques correspondants et dans laquelle une image spatiale à décoder est déterminée à partir desdits composants chromatiques.

**9.** Procédé selon la revendication 8, dans laquelle ladite image spatiale à décoder consiste en l'un desdits composants chromatiques.

**10.** Procédé selon la revendication 9, dans lequel le décodage et la détection du filigrane sont effectués sur chacun desdits composants chromatiques et dans lequel la présence ou l'absence du filigrane est déterminée selon un critère de majorité basé sur le résultat de la détection du filigrane sur les trois composants du filigrane.

**11.** Procédé selon la revendication 8, dans lequel une image de luminance est déterminée à partir desdits composants chromatiques, et ladite transformée est appliquée à ladite image de luminance.

**12.** Procédé selon l'une ou plusieurs des revendications précédentes, comprenant de plus l'étape consistant à sélectionner certains desdits coefficients de ladite matrice et à calculer la valeur de la fonction de détection et la valeur seuil pour lesdits coefficients seulement.

**13.** Procédé selon l'une ou plusieurs des revendications 8 à 12, dans lequel ladite image spatiale à décoder est agrandie à une taille prédéterminée, et ladite transformée est appliquée à l'image spatiale agrandie pour la récupération d'une synchronisation, ladite synchronisation étant appliquée à l'image spatiale à décoder pour produire une image spatiale synchronisée.

**14.** Procédé selon la revendication 13, dans lequel ladite image spatiale synchronisée est agrandie à une taille prédéterminée, et ladite transformée est appliquée à ladite image spatiale synchronisée agrandie.

**15.** Procédé selon l'une ou plusieurs des revendications 4 à 7, dans lequel les coefficients sélectionnés sont divisés en une pluralité de petites zones et dans lequel lesdits paramètres statistiques $\alpha_i$ et $\beta_i$ sont censés être constants pour chaque zone.

**16.** Procédé pour le filigranage d'images numériques, comprenant les étapes consistant à :

a) acquérir une image d'origine à filigraner;

b) décomposer l'image d'origine en les trois composants de couleur;

c) définir, à partir desdits composants de couleur, une image spatiale représentée par une image de luminance obtenue à partir desdits composants de couleur en appliquant une transformée inversible, ou par lesdits composants chromatiques;

d) agrandir ladite image spatiale à une taille prédéterminée afin d'obtenir une image spatiale agrandie;

e) appliquer à ladite image spatiale agrandie une transformée pour transformer l'image spatiale agrandie en une matrice de coefficients de ladite transformée;

f) sélectionner un groupe desdits coefficients;

g) appliquer un filigrane aux coefficients sélectionnés de la transformée pour obtenir une matrice de coefficients filigranés;

h) appliquer une transformée inverse à la matrice de coefficients filigranés afin d'obtenir une image spatiale filigranée;

i) ramener l'image spatiale filigranée à la taille d'origine de l'image avant l'agrandissement de celle-ci à ladite taille prédéterminée;

j) introduire un modèle de synchronisation dans ladite image spatiale filigranée, ledit modèle permettant de déterminer la taille d'origine de l'image si ladite image a été soumise à une transformation géométrique;

k) réintroduire l'image spatiale filigranée et synchronisée dans l'image d'origine en appliquant une transformée qui est l'inverse de ladite transformée inversible utilisée pour obtenir ladite image de luminance à partir desdits composants de couleur à l'étape (c).

**17.** Procédé selon la revendication 16, dans lequel ladite image spatiale est une image de luminance obtenue en combinant lesdits trois composants de couleur.

**18.** Procédé selon la revendication 16 ou 17, dans lequel la transformée appliquée est une transformée de Fourier discrète (DFT).

**19.** Procédé selon la revendication 16, 17 ou 18, dans lequel ledit filigrane a la forme

$$y'_i = y_i + \alpha m_i\, y_i$$

où
$y'_i$ est le module du i-ème coefficient filigrané;

yi est le module correspondant avant le filigranage;
mi est le i-ème coefficient du filigrane; et
$\alpha$ est l'énergie du filigrane.

EP 1 171 756 B1

# FIG. 1

FIG. 2

FIG. 3

Alphabetic string

| $C_{L,1}$ | $\cdots$ | $C_{L,16}$ |

Numeric string

| $C_{N,1}$ | $\cdots$ | $C_{N,8}$ |

Encoding of the watermark

Quadruple $S=(S1,S2,S3,S4)$

Pseudo-random number generator

Watermark

FIG. 4

## FIG. 5

(a)

(b)

## FIG. 6

(a)

$N = 66.384$

(b)

FIG. 7

(a)

Original luminance image

Extension to 1024x1024

Watermarking + Cropping

Watermarked luminance image

(b)

Watermarked and cropped image

Estensione a 1024x1024

Recovery of the watermark

*FIG.10*

(a)

(b)

(c)

*FIG. 8*

# FIG.9

Watermarked
image
$I_M$

↓

Breakdown into
R, G, B bands

} 201

R
G
[B]

↓

Extraction of
watermarked
luminance — 203

↓

$Y_M$ → | Expansion to 1024 x 1024 pixels | 205 → $Y_M$ → | FFT | 207 —Modulus→ | Recovery of timing | 209 → | Synchro-nization | 211

| Threshold detection of the watermark | 215 ←Modulus— | FFT | 214 ← | Expansion to 1024 x 1024 pixels | 213

The threshold is exceeded — 217

NO → The image is not water-marked with the water-mark which is looked for — 218

YES → The image is watermarked with the watermark which is looked for — 219

Pseudo-random real number generator

String        $\alpha_m$

FIG.11

FIG.12